**Europäisches Patentamt**

**European Patent Office**

**Office européen des brevets**

(11) Publication number: **0 084 604**
**A1**

## (12) EUROPEAN PATENT APPLICATION

(21) Application number: **82109411.7**

(22) Date of filing: **12.10.82**

(51) Int. Cl.³: **G 02 F 1/17**, G 09 F 9/30

(30) Priority: **25.01.82 US 342334**

(43) Date of publication of application: **03.08.83**
**Bulletin 83/31**

(84) Designated Contracting States: **BE CH DE FR GB IT LI NL SE**

(71) Applicant: **AMERICAN CYANAMID COMPANY, 1937 West Main Street P.O. Box 60, Stamford Connecticut 06904 (US)**

(72) Inventor: **Giglia, Robert Domenico, 14 Chester Drive, Rye New York 10580 (US)**

(74) Representative: **Wächtershäuser, Günter, Dr., Tal 29, D-8000 München 2 (DE)**

(54) **Thin film transistor-driven electrochromic display and system.**

(57) An electrochromic matrix display flat-panel having a substrate of thin film transistors as driving elements for the individual electrochromic elements in the display is provided. Also, an electrochromic matrix display system is provided comprising an electrochromic matrix display panel, and addressing means and means for providing pulse trains to write or color the individual electrochromic elements in the display. Each pulse in the pulse train has charge content which is less than the current carrying capability of the transistor, but the total charge content of all the pulses in the train is sufficient to color an electrochromic element. The transistors are preferably FETs.

## THIN FILM TRANSISTOR-DRIVEN
## ELECTROCHROMIC DISPLAY AND SYSTEM

### TECHNICAL FIELD OF THE INVENTION

This invention relates to persistent electrochromic devices for indicators, information displays, projection displays and other displays, and more particularly, to an electrochromic device and system having integral thin film transistors to drive the electrochromic elements in the device and system.

### BACKGROUND OF THE INVENTION

The term persistent electrochromism denotes the property of a material which enables its electromagnetic radiation absorption characteristic to be altered, in most instances even at ambient temperature, by application of an electric field and to remain in the altered state when the influence of the field is removed. Such materials, for example, may exhibit little or no absorption of visible wavelengths in the absence of an electric field and therefore be transparent, but when subjected to an electric field, effectively absorb in the red end of the spectrum, turning blue in color. Similar effects can be observed in other portions of the electromagnetic radiation spectrum, invisible as well as visible.

If a layer of a persistent electrochromic material is disposed between a pair of electrodes, across which a potential is applied, the radiation transmitting characteristics of the combination can be varied by controlling the electric field produced across the electrochromic material. On a substrate which originally is clear, i.e., presenting substantially no diminution of the light transmitting ability of the substrate, application of a voltage between the electrodes to establish an electric field of the proper polarity changes the light absorption characteristic of the electrochromic material, turning it darker, for example, thus decreasing the light transmitting ability of the entire assembly.

Electrochromic devices are known in the art and are described in prior, commonly assigned patents, such as U.S. Pat. Nos. 3,521,941; 3,704,057; 3,708,220; 3,843,232; 3,847,468, 3,879,108 and 4,088,395. These patents disclose suitable materials and methods for forming overall electrochromic devices.

Electroluminescent displays (EL) and liquid crystal displays (LCD) have incorporated thin film transistor (TFT) panels in flat two-dimensional array or matrix configurations. The use of TFT arrays to drive such display systems are disclosed in "Large Scale Integration of Displays through Thin-film Transistor Technology" by Dr. T.B. Brody and P.R. Malmberg, Journal of International Society of Hybrid Microelectronics, Vol. II, Number 1 (Spring 1979) (hereafter "Malmberg and Brody"), and in "Electroluminescent Display with Nonvolatile Storage," SID Digest 1975, by Dr. T.B. Brody, K.K. Yu and L.J. Sienkiewicz.

28,790

The current needed to address the liquid crystal and electroluminescent devices is comparatively small compared to the current needed to address an electrochromic device. Therefore, although the low current carrying capacity of a thin film transistor element is sufficient for driving liquid crystal (LCD) and electroluminescent (EL) displays without much difficulty, the relatively high current needed to drive electrochromic devices has heretofore rendered thin film transistors unsuitable as driving elements. See for example Giglia French Patent No. 2,291,565 published on November 13, 1975, which is directed to an electrochromic integrated circuit device.

## SUMMARY OF THE INVENTION

The present invention provides an electrochromic display device and system having integral thin film transistors, capable of being fabricated by suitable integrated circuit techniques. The device comprises a substrate preferably of glass, a thin film transistor (TFT) layer on the substrate, a film of persistent electrochromic inorganic compound, such as tungsten oxide ($WO_3$), on the thin film transistor layer, an electrolyte layer such a Polyamps electrolyte on the electrochromic layer, a conductive counter-electrode layer such as a carbon paper electrode on the electrolyte layer, and a backing layer, such as NESA glass (comprising a transparent tin oxide layer on one side of a glass sheet), as the counter-electrode layer. The electrochromic material can be in the form of an array or matrix of elements arranged in two-dimensions.

The conduction of the thin film transistor (TFT) enables addressing of the associated electrochromic

28,790

element to write or color the element. Since a relatively high current is needed to obtain a suitably high contrast ratio, and since a single relatively large current pulse would exceed the current rating of the TFT, the electrochromic element is addressed by a number of relatively low current pulses, each separate pulse of which is below the current rating of the TFT.

In accordance with the present invention, an electrochromic display system is provided comprising a thin film transistor display panel of the above described type, a pulse train display input signal driver and a sweep shift register. The thin film transistor display panel comprises thin film transistors, preferably FETs arranged in at least two rows and two columns, with the gate terminals connected to row lines and the source terminals connected to column lines with an electrochromic element connected to each drain terminal or pad of an FET. The source terminal column lines are addressed sequentially by the sweep shift register, and the pulse train display input signal driver provides write information in the form of a pulse train along row lines for all electrochromic elements along the addressed line that are desired to be colored. Each pulse in the pulse train has a charge content which is less than the current carrying capability of the FET, but the total charge content of all the pulses in the train is sufficient to color the electrochromic element associated with the pulsed transistor.

Other advantages and objects of the invention will become more apparent from a detailed description of preferred embodiments of the invention, from the claims and from the accompanying drawings.

## BRIEF DESCRIPTION OF THE DRAWINGS

Figure 1 shows a side elevational view, in cross-section, of a first embodiment of an electrochromic device having a thin film transistor layer integral therewith;

Figure 2 shows a side elevational view, in cross-section of a second embodiment of an electrochromic device having a thin film transistor layer integral therewith;

Figure 3 is an electrical schematic of an electrochromic display system having a display matrix, and driving means to supply suitable driving pulses; and

Figure 4 shows waveforms useful in explaining operation of the system of Figure 3.

## DETAILED DESCRIPTION OF THE PREFERRED EMBODIMENTS

By way of background, a "persistent electrochromic material" is defined as a material responsive to the application of an electric field of a given polarity to change from a first persistent state in which it is essentially non-absorptive of electromagnetic radiation in a given wave length region, to a second persistent state in which it is absorptive of electromagnetic radiation in the given wave length region, and once in said second state, is responsive to the application of an electric field of the opposite polarity to return to its first state. Certain of such materials can also be responsive to a short circuiting condition, where a return to the non-absorptive initial state is obtained even in the absence of an opposite polarity electric field.

The word "persistent" is meant to refer to the ability of the material to remain in the absorptive state to which it is changed after removal of the electric field, as distinguished from the ability to substantially instantaneously revert to the initial state, as in the case of the Franz-Keldysh effect.

The materials which form the electrochromic materials of the device in general are electrical insulators or semi-conductors. This excludes metals, metal alloys, and other metal-containing compounds which are relatively good electrical conductors.

While not wholly understood, it appears that coloration of the electrochromic materials must be accompanied by the uptake of positive counterions provided in the electrolyte.

The persistent electrochromic materials are further characterized as inorganic substances which are solid under the conditions of use, whether as pure elements, alloys, or chemical compounds, containing at least one element of the Periodic System which can exist in more than one oxidation state in addition to zero. The term "oxidation state" as employed herein is defined in "Inorganic Chemistry", T. Moeller, John Wiley and Sons, Inc., New York, 1952. These include materials containing a transition metal element (including Lanthanide and Actinide series elements), and materials containing non-alkali metal elements such as copper. Preferred materials of this class are films of transition metal compounds in which the transition metal may exist in any oxidation state from +2 to +8. Examples of these are: transition metal oxides, transition metal oxysulfides, transition metal halides, selenides, tellurides, chromates, molybdates, tungstates, vanadates, niobates, tantalates, titanates, stannates and the like. Particularly preferred are films of metal stannates, oxides and sulfide of the metals of Groups (IV)B, (V)B and (VI)B of the Periodic System, and Lanthanide series metal oxides and sulfides. Examples of such are copper stannate, tungsten oxide, cerium oxide, cobalt tungstate, metal molybdates, metal titanates, metal niobates, and the like. Additional examples of such compounds are listed in U.S. Pat. No. 3,704,057, which is incorporated by reference herein.

The preferred electrochromic material for use in the present invention is a compound which contains at least one element selected from Group VA, VIA, VIIA of the Periodic Table of the elements and at least one cation from Groups IB, IIB to VIIIB including Lanthanide and Actinide series. Particularly advantageous materials are $WO_3$ and $MoO_3$.

When the persistent electrochromic materials are employed as films, the thickness thereof desirably will be in the range of from 0.1-100 microns. However, since a small potential will provide an enormous field strength across very thin films, the latter, i.e., 0.1-10 microns, are preferred over thicker ones. Optimum thickness will also be determined by the nature of the particular compound being laid down as films and by the film-forming method since the particular compound and film-forming method may place physical (e.g., non-uniform film surface) and economic limitations on manufacture of the devices.

The films may be laid down on any substrate which, relative to the film, is electrically nonconducting. Suitable substrate materials include glass, wood, paper, plastics, plaster, and the like, including transperent, translucent, opaque or other optical quality materials. A preferred embodiment in the instant device would employ at least one transparent electrode.

When the electric field is applied between the electrodes, a blue coloration of the previously transparent sandwich occurs, i.e., the persistent electrochromic layer becomes absorptive of electromagnetic radiation over a band emcompassing the red end of the visible spectrum, thereby rendering it bluish in appearance. Prior to the application of the electric field, it was essentially non-absorbent and thus transparent.

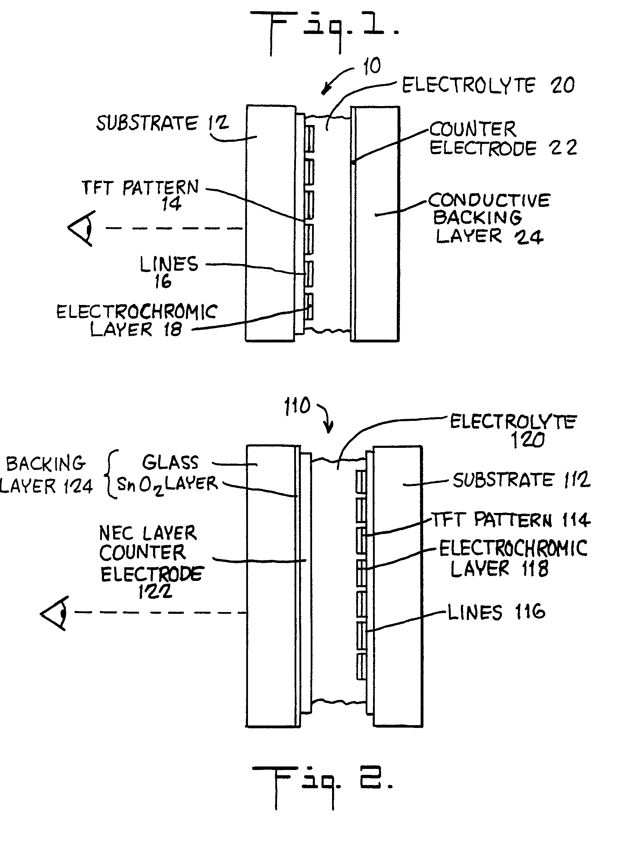

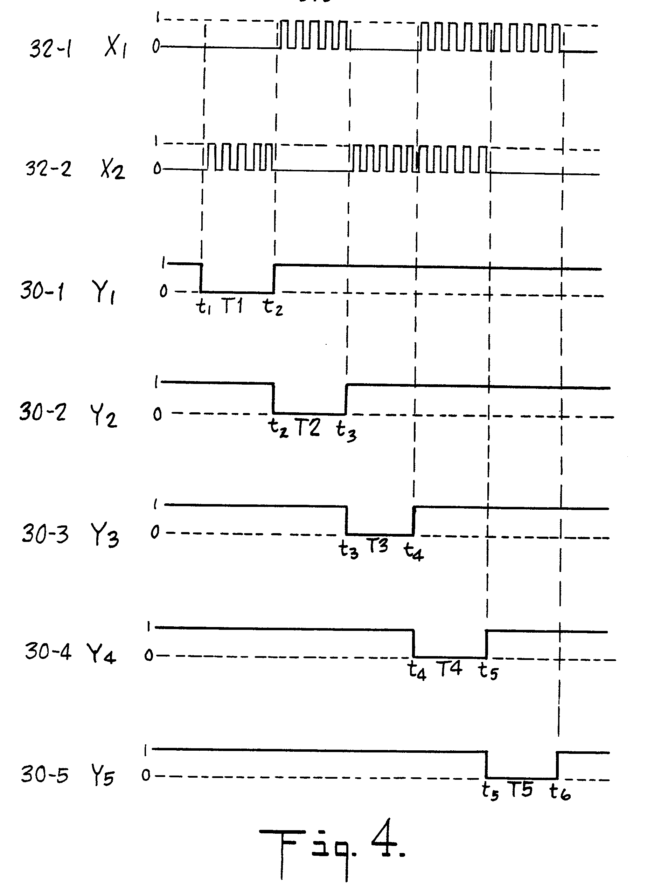

Referring now to Figure 1, an electrochromic display device having integral TFT's according to the present invention will be described. An electrochromic display device 10 is shown comprising a glass substrate 12 having a thin-film transistor (TFT) pattern 14 deposited thereon. The TFT layer comprises a plurality of FET elements arranged in an X-Y matrix or array, having the gate terminals connected to column lines, indium oxide ($InO_2$) material e.g., and the source terminals connected to row lines of indium oxide material. See e.g. Malmberg and Brody, Page 31, Figure 5, which illustrates an arrangement of gate and source terminals for an electroluminescent display element. An insulator pad is provided at the points where the row lines cross the column lines, so as to prevent shorting of the row and column lines. Deposited at each of the FET is an electrochromic element 18 comprising preferably tungsten oxide ($WO_3$).

A pigmented electrolyte 20 preferably comprising a polymer known as Polyamps (which is an acronym for poly-2-acrylamido-2-methyl propanesulfonic acid) is disposed between the electrochromic elements 18 and a paper carbon counter-electrode 22.

A metal or NESA type conductive backing layer 24 is disposed on the side of the paper carbon counter-electrode 22 opposite from the pigmented electrolyte 20.

In the Figure 1, the substrate 12 is transparent so that one will be able to view the electromagnetic radiation absorption characteristics of the electrochromic elements 18. Thin-film transistor panels comprising the glass substrate 12 and the TFT layer 14 are currently available as a basic unit. The electrochromic elements 18 can be deposited on the TFT layer by known vacuum deposition techniques. The arrangement of the elements 18 can form a dot matrix arrangement having, for example, seven dots in the vertical or y-direction and five dots in the horizontal or x-direction, which is a commonly sized matrix for representing one digit or letter in an alpha-numeric display device. Of course, the overall device is not limited to matrices of the type just described, and can be larger or smaller, and can contain more or less elements, including of course multiple 5x7 matrix arrays in both the vertical and horizontal directions for representing columns and lines of alpha-numeric data.

As described above, the electrolyte 20 preferably is the polymer known as Polyamps. Excellent results have been obtained with Polyamps in which the optimum water concentration for room temperature operation is 35 percent based on dry polymer weight. This level is conveniently established by stabilizing 500 $\mu$m thick polymer sheets in 65 percent RH at 22°C. When exposed to 50°C the 35 percent water again slowly hydrates the $WO_3$. To avoid lowering the water content, which would reduce the switching speed, a thin layer of partially crosslinked HEM/AMPS copolymer (hydroxyethyl methacrylate and 2-acrylamido-2-methlypropanesufonic acid) can be applied as protective interlayer between the $WO_3$ and Polyamps. Although the copolymer has a lower conductivity than Polyamps, it is thin enough so as not to contribute much to the internal cell resistance. Other suitable polymers may be found in commonly assigned U.S. patent No. 4,174,152.

Polyamps is usually transparent as a film, and in the embodiment of Figure 1 pigmentation is desired to hide the dark counter-electrode 22 and provide a bright reflecting background for the electrochromic image. White titanium dioxide is a stable pigment which can be easily dispersed in Polyamps and has good hiding power. A preferred ratio of Polyamps to titanium oxide is 9 to 1. However, since the conductivity of the electrolyte falls when titanium oxide is added, by substituting a small amount of polyethylene oxide (PEO) for an equal amount of Polyamps, the conductivity can be improved. While the conductivity effects are not completely understood, it is believed that the special water retaining characteristic of PEO may be a critical factor. The use of a polymeric electrolyte, such as Polyamps, increases the switching speed of the electrochromic displays due to the enhanced proton conductivity. In a polymer, the proton conductivity is determined by its water content and equivalent weight (EW) defined by EW = molecular weight of monomer unit/number of acid groups. A low EW and high water content contribute to good proton conductivity. The equivalent weight of Polyamps is 207.

The paper counter-electrode basically is a carbonfilled fibrous sheet. A preferred fiber used is an acrylic fiber and a fluorocarbon resin such as

28,790

a Teflon (polytetrafluoroethylene) binder may be incorporated to provide a more cohesive sheet. An electrochromic material such as $WO_3$ may also be incorporated on the sheet.

Examples of paper counter-electrode preparations are disclosed in commonly assigned U.S. Patent No. 4,088,395, issued May 9, 1978.

The backing layer 24 may comprise a commercially available product known as NESA glass, which is a product having a transparent coating of conductive tin oxide on one surface of a glass sheet. In the embodiment shown in Figure 1, the backing layer 24 need not be transparent, because the intended viewing side is from the left as shown in Figure 1. Accordingly, the backing layer may be glass, metal or plastic of the like.

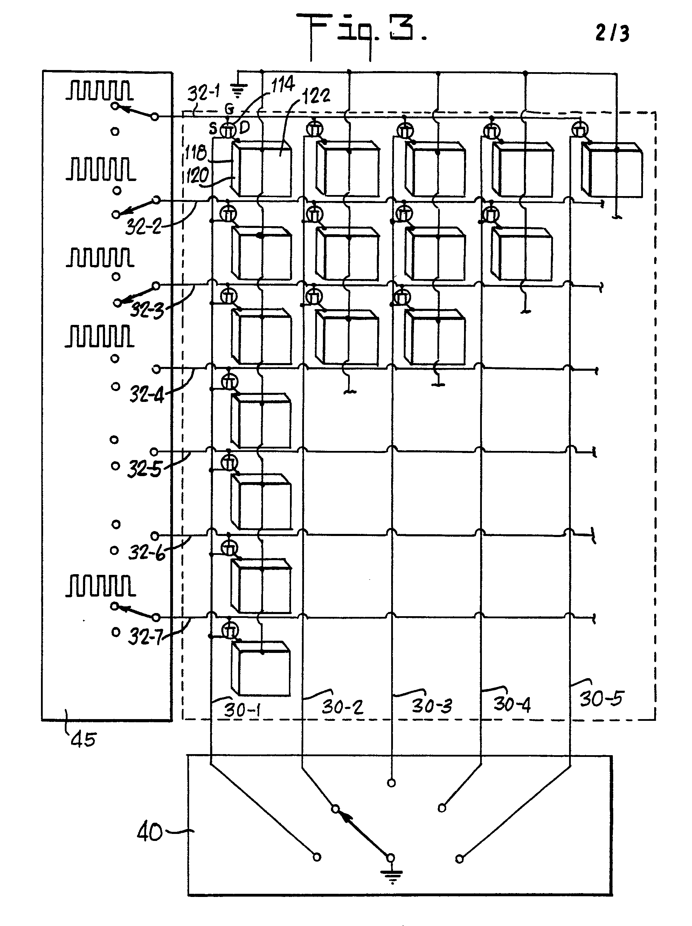

Referring now to Figure 2, an alternative embodiment of an electrochromic device is shown wherein the intended viewing position is also from the left, as shown in the drawing. The device 110 comprises a glass substrate 112 on which is deposited a TFT layer 114. The glass substrate 112 and TFT layer 114 are available as a unit. The glass substrate 112 and TFT layer 114 are preferably light colored and opaque to serve as a background for the electrochromic elements or dots.

The TFT layer in this embodiment is similar to the embodiment of Figure 1 discussed above, and comprises a plurality of FET elements arranged in an X-Y matrix or array, having the gate terminals connected to column lines, indium oxide material, e.g., and the source terminals connected to row lines of indium oxide material. An insulator pad is provided at the cross over points of the row and column lines. Also as in Figure 1, electrochromic elements 118 are deposited on the drain pad of the TFT elements. Electrolyte 120 in the embodiment of Figure 2 is preferably transparent, i.e. in its natural state with no pigment added if a polymer such as Polyamps is used.

A counter-electrode 122 comprises preferably tungsten oxide non-electrochromic NEC material (really a partially electrochromic material as described in U.S. Pat. No. 4,170,406) forming a layer between the electrolyte 120 and the backing layer 124. The backing layer 124 comprises NESA glass comprising a transparent glass sheet and transparent tin oxide layer. Since the electrochromic elements are to be viewed from the left as shown in Figure 2, the backing layer 124, counter-electrode 122, and electrolyte 120 should be transparent.

Since the current rating of the TFT element is relatively low compared to the magnitude of the current pulse needed to address the electrochromic elements, the electrochromic display system of the invention uses an addressing method in which multiple pulses are used to update each informational change, so that the greater charge accumulation required by the electrochromic elements is supplied with a number of smaller current pulses instead of one large signal pulse which might exceed the rating of the TFT.

Figure 3 shows an electrical schematic of an electrochromic display sustem which comprises a TFT electrochromic display panel and means for producing suitable pulse trains to color the individual electrochromic elements without exceeding the current rating of the thin film transistor of the electrochromic panel. Figure 4 shows examples of waveforms, in the form of pulse trains which can be supplied by the pulse train display input signal driver of Figure 3 to a row line 32-1 in order to
color the electrochromic element on row line 32-1 and
addressed line 30-2. The addressing means 40 sequentially addresses each column line 30-1 through 30-5
by connecting that addressed line to ground (i.e.
zero logic level) in a sweep generator fashion.
Thus, for all the electrochromic elements in the
addressed column line which are desired to be colored,
the pulses from a pulse train as shown in Fig. 4 will
be supplied along associated row lines 32.

When applying the waveforms of Figure 4,
during the time period T1 between times t1 and t2,
the column line 30-1 is addressed by providing a zero
logic signal thereto, and pulses are provided along
row line 32-2 by pulse train display input signal
driver as shown. Consequently the FET at column 30-1
and row line 32-2 is pulsed and causes the associated
electrochromic element at that position to receive
color information. However, the electrochromic
element at column 30-1 and row line 32-1 does not
receive color pulse information because the associated FET at that position does not receive pulses
during the time period T1. During the time period
T2, column line 30-2 is addressed and the electrochromic element at column line 30-2 and row line 32-1
receive color information, whereas the element at
column line 30-2 and row line 32-2 do not. During
time period T3, the column line 30-3 is addressed and
the electrochromic element along row 32-2 (at column
30-3) receives color information, whereas the element
along row 32-1 (at column 30-3) does not. During
time period T4 where column line 30-4 is addressed,
the elements along rows 32-1 and 32-2 (at column
30-4) both receive color information. During time
period T5 the element along row 32-1 (at column 30-5) receives color information, but the element along row 32-2 at the same column does not.

Although waveforms for rows 32-3 through 32-7 are not shown, they would be similar to the waveforms 32-1 and 32-2 so that pulses would be provided if color information at the selected rows along the addressed column is desired, and no pulses if color information is not desired. Of course, the pattern of the overall color information is selected with reference to what overall pattern is desired on the overall display. In a typical application, the information provided at the row lines 32-1 through 32-7 would be provided by a data processing system.

Since the FET transistors effectively increase the switching threshold voltage of the associated electrochromic elements, cross talk problems are substantially eliminated, see for e.g. U.S. Pat. No. 4,129,861 to Giglia, disclosing the use of semiconductor elements to increase the threshold switching level to thereby substantially eliminate cross talk.

Since the TFT increases the threshold voltage of the switching for the electrochromic element, use of a device according to the invention will extend the usage of electrochromics into new areas of matrix-addressed displays. The invention can be useful in applications requiring complex character generation, such as pictorial and graphic displays. It is also contemplated that the invention be employed in a display of alpha-numeric information, particularly in combination with computer-generated information, or where photocopying of the displayed information is desired. The displays according to the invention can also be used in reflective applications and in applications where liquid crystal displays and electroluminescent displays are currently being used.

Applications in which the present application could be used include watch and clock faces, automobile dashboard displays, electronic calculators, telephone displays, aircraft instrument panels, large sign or panel displays both indoor and outdoor, radio or television channel displays, sports scoreboards, cash register displays, war room displays, transportation arrival and departure displays, scales and gasoline pump indicators.

From the foregoing, it will be observed that numerous variations and modifications may be effected without departing from the true spirit and scope of the novel concept of the invention. It is to be understood that no limitation with respect to the specific embodiments illustrated herein is intended or should be inferred. It is, of course, intended to cover by the appended claims all such modifications as fall within the scope of the claims.

0084604

8,790

I CLAIM:

1. An electrochromic display device comprising:

a substrate;

a thin film transistor layer on said substrate;

a film of persistent electrochromic inorganic compound on said thin film transistor layer;

an electrolyte layer on said film;

a conductive counter-electrode layer on said electrolyte layer; and

a backing layer on said counter electrode-layer, whereby the electrochromic film is addressable by providing current through the thin film transistor layer.

2. The electrochromic display device according to claim 1 wherein the film of persistent electrochromic inorganic compound comprises tungsten oxide.

3. The electrochromic display device according to claim 1 wherein the electrolyte layer comprises transparent Polyamps electrolyte.

4. An electrochromic display device comprising:

a transparent substrate;

a thin film transistor layer on said substrate;

a plurality of persistent electrochromic inorganic compound film elements in a two dimensional array on said thin film transistor layer in registration therewith;

a layer of pigmented Polyamps electrolyte on said electrochromic film elements; and

a conductive backing layer on said paper electrode, whereby the electrochromic film is addressable by providing current through the thin film transistor layer.

5. The electrochromic display device according

to claim 4 wherein the electrochromic film elements comprise tungsten oxide.

6. An electrochromic display device comprising:

a transparent substrate;

a thin film transistor layer on said substrate;

a plurality of persistent electrochromic inorganic compound film elements in a two dimensional array on said thin film transistor layer;

a layer of transparent Polyamps electrolyte on said electrochromic film elements;

a conductive counter-electrode layer on said electrolyte layer; and

a layer of NESA glass which comprises a transparent coating of conductive tin oxide on one surface of a glass sheet disposed on said counter-electrode layer, wherein the electrochromic film is addressable by providing current through the thin film transistor layer.

7. The electrochromic display device according to claim 6 wherein the electrochromic film elements comprise tungsten oxide.

8. An electrochromic display matrix system comprising:

an electrochromic display matrix comprising a thin film transistor substrate wherein each thin film transistor has an associated electrochromic element and wherein said transistors and elements are arranged in a least two rows and at least two columns, in a configuration suitable for multiplex addressing having a set of column lines with each column line connecting one of a gate-type or source-type terminal of the transistors in said column, and a set of row lines with each row line connecting the other of the source-type or gate-type terminals of the transistors in said row;

means for selectively addressing each
column line one at a time;

means for selectively providing write
information at each row line for all electrochromic
elements along said addressed line desired to be written,
wherein said write information comprises a pulse train
having a series of pulses wherein the charge in each
pulse is less than the current carrying capability of
the transistor, and wherein the total charge of all the
pulses in the train is sufficient to color an electrochromic element.

9.    The system according to claim 8 wherein
the thin film transistors comprise FET transistors.

10.   The system according to claim 9 wherein
the column lines connect the source terminals of the
FETs and the row lines connect the gate terminals of the
FETs.

11.   The system according to claim 8 wherein
the means for selectively addressing each column line
one at a time comprises a sweep shift register which
sequentially connects one column line at a time to a low
logic level signal line.

12.   The system according to claim 8 wherein
the means for providing write information comprises a
signal driver.

Fig. 1.

SUBSTRATE 12

10

ELECTROLYTE 20

COUNTER
ELECTRODE 22

TFT PATTERN
14

CONDUCTIVE
BACKING
LAYER 24

LINES
16

ELECTROCHROMIC
LAYER 18

110

ELECTROLYTE
120

BACKING
LAYER 124 { GLASS
{ $SnO_2$ LAYER

SUBSTRATE 112

TFT PATTERN 114

ELECTROCHROMIC
LAYER 118

NEC LAYER
COUNTER
ELECTRODE
122

LINES 116

Fig. 2.

# Fig.3.

32-1
114
122
G
S D
118
120
32-2
32-3
32-4
32-5
32-6
32-7

45

30-1  30-2  30-3  30-4  30-5

40

0084604

3/3

Fig. 4.

| | **DOCUMENTS CONSIDERED TO BE RELEVANT** | | EP 82109411.7 |
|---|---|---|---|

| Category | Citation of document with indication. where appropriate, of relevant passages | Relevant to claim | CLASSIFICATION OF THE APPLICATION (Int. Cl. ³) |
|---|---|---|---|
| A | EP - A1 - 0 019 976 (PHILIPS)<br>* Page 2, line 18 - page 4, line 28; page 5, line 1 - page 8, line 21; fig. 1-4 *<br>-- | 1,8 | G 02 F 1/17<br>G 09 F 9/30 |
| A | GB - A - 1 558 014 (XEROX)<br>-- | | |
| A | DE - A1 - 2 756 763 (IBM)<br>* Claims *<br>-- | | |
| A | DE - B2 - 2 751 870 (IBM)<br>* Totality *<br>-- | 8-12 | |
| A | EP - A1 - 0 000 616 (IBM)<br>* Claims *<br>-- | 1,8 | **TECHNICAL FIELDS SEARCHED (Int. Cl. ³)** |
| A | EP - A1 - 0 007 110 (TIMEX)<br>-- | | G 09 F 9/00<br>G 02 F 1/00 |
| A | GB - A - 2 010 560 (KABUSHIKI)<br>-- | | |
| D,A | US - A - 4 170 406 (GIGLIA)<br>* Claims *<br>---- | 2,5,7 | |

| | The present search report has been drawn up for all claims | | |
|---|---|---|---|
| Place of search<br>VIENNA | Date of completion of the search<br>29-04-1983 | | Examiner<br>SCHMIDT |